# EUROPEAN PATENT APPLICATION

(11) **EP 3 253 164 A1**
(43) Date of publication of application: **06.12.2017**
(21) Application number: 16743475.2
(22) Date of filing: 28.01.2016
(51) Int. Cl.: H04W 74/02, H04W 16/14, H04W 72/08, H04W 72/14

(54) **USER DEVICE AND COMMUNICATION CONTROL METHOD**

(30) Priority: 30.01.2015 JP 2015016401
(71) Applicant: NTT DOCOMO, INC., Chiyoda-ku Tokyo 100-6150 (JP)
(72) Inventor: UCHINO, Tooru, Tokyo 100-6150 (JP); TAKEDA, Kazuki, Tokyo 100-6150 (JP); HARADA, Hiroki, Tokyo 100-6150 (JP)
(74) Representative: Hoffmann Eitle
(86) International application number: PCT/JP2016/052497
(87) International publication number: WO 2016/121872

(57) **Abstract**

Techniques are disclosed for implementing the LBT in consideration of propagation delay differences in a cell. One aspect of the present invention relates to user equipment, comprising: a transmission and reception unit configured to use a scheduled radio resource to perform transmission and reception to/from a base station via a cell; and a frequency usage detection unit configured to perform Listen Before Talk (LBT) on a frequency band in the cell at an LBT timing independent of a scheduled uplink transmission timing, wherein when the frequency usage detection unit determines that no other user equipment is communicating in the frequency band, the transmission and reception unit performs uplink transmission to the base station.

## Description

### TECHNICAL FIELD

The present invention relates to a radio communication system.

### BACKGROUND ART

In current LTE (Long Term Evolution) system, licensed bands assigned to -communication operators are used for radio communication. Popularization of sophisticated user equipment (UE), such as smartphones and tablets, drastically increases user traffic. In order to accommodate the increasing user traffic, additional frequency bands are required, but there are a limited amount of licensed bands. Accordingly, it is being discussed that frequency bands may be expanded in the LTE systems by using available unlicensed bands other than the licensed bands. One example of such unlicensed bands includes bands for use in WiFi (registered trademark) and so on.

In the unlicensed band, if it is detected that another entity, such as another user equipment or a base station (evolved NodeB: eNB), is presently communicating in the frequency band, the user equipment is prohibited from communicating in the unlicensed band. Accordingly, a transmitter performs Listen Before Talk (LBT) at a timing corresponding to a predetermined period before an uplink transmission timing. In the LBT, the transmitter searches a whole frequency band of interest at the timing corresponding to the predetermined period before the uplink transmission timing, determines whether another transmitter (such as an eNB, a LAA (Licensed Assisted Access)-UE and a WiFi device) is communicating in the frequency band , and activates transmission in the frequency band only if there is no communication therein. On the other hand, when another transmitter is using even a portion of the frequency band, that is, once it is detected that reception power from another transmitter exceeds a threshold, the transmitter stops its own transmission (LBT: NG).

### Prior Art Document

### [Non-Patent Document]

Non-Patent Document 1: RP-131701

### SUMMARY OF INVENTION

### [PROBLEM TO BE SOLVED BY THE INVENTION]

It is assumed that when a base station and user equipment perform transmission not only in the unlicensed bands but also in the licensed bands, they perform the LBT to activate the transmission. In cases where the base station frequency-multiplexes user equipments in a LAA, that is, where the multiple user equipments are scheduled for transmission at an identical subframe, different uplink transmission timings are applied to the respective user equipments due to propagation delay differences. Accordingly, it may be detected in the LBT that other user equipments are performing transmission at that subframe.

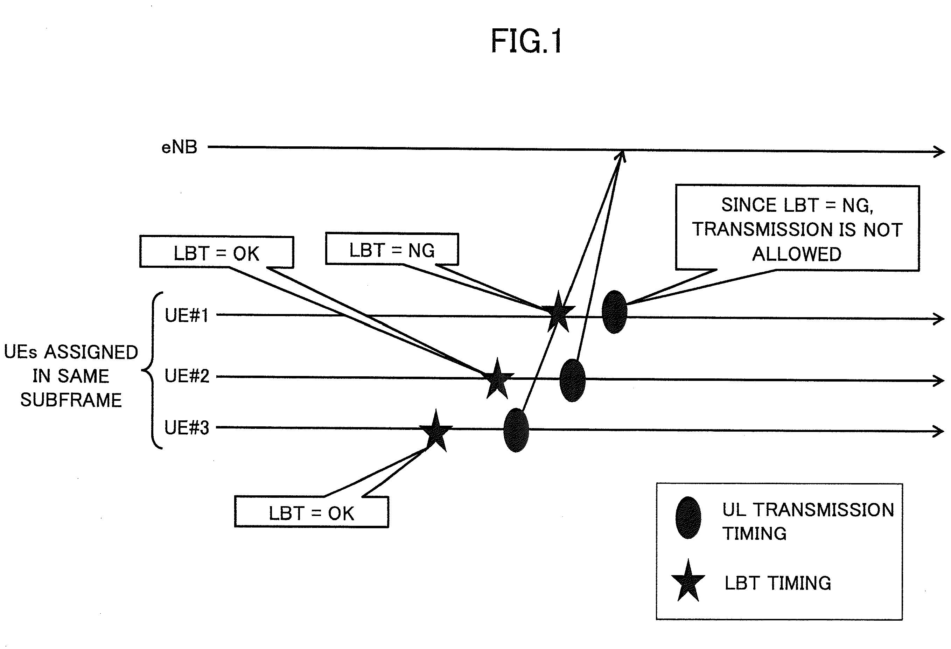

For example, as illustrated in FIG. 1, it is supposed that a base station has assigned an identical subframe to three user equipments UE#1, UE#2 and UE#3. Different Timing Advance (TA) values are specified to these user equipments so as to compensate for propagation delay differences corresponding to their distances from the base station in a cell, and the respective uplink transmissions are performed at different uplink transmission timings. In the illustrated example, the largest TA value is assigned to the UE#3, and the smallest TA value is assigned to the UE#1. In the conventional LBT, the user equipment performs the LBT at a timing corresponding to a predetermined period before a specified uplink transmission timing (LBT timing). As a result, it is detected in the LBT for the UE#3 and UE#2 that no other user equipment is performing transmission in the frequency band (LBT=OK), and the UE#3 and UE#2 will accordingly perform the uplink transmission at that subframe. On the other hand, in the LBT for the UE#1, since the UE#3 performs the uplink transmission before the LBT timing for the UE#1, it would be detected that the user equipment UE#3 is using the frequency band (LBT=NG), and the UE#1 would stop the uplink transmission at the subframe. Note that the predetermined period may be typically a common period statically assigned to the user equipments UE#1, UE#2 and UE#3.

In order to overcome the above problem, it is assumed that in frequency-multiplexing user equipments, a base station selects user equipments, whose LBT timings are almost the same, and frequency-multiplexes these user equipments. In this case, however, additional scheduling constraints arise in a scheduler in the base station, which may reduce system efficiency.

Accordingly, in light of the above-stated problem, an object of the present invention is to provide some techniques for implementing the LBT in consideration of propagation delay differences in a cell.

### [MEANS FOR SOLVING THE PROBLEM]

In order to achieve the above object, one aspect of the present invention relates to user equipment, comprising: a transmission and reception unit configured to use a scheduled radio resource to perform transmission and reception to/from a base station via a cell; and a frequency usage detection unit configured to perform Listen Before Talk (LBT) on a frequency band in the cell at an LBT timing independent of a scheduled uplink transmission timing, wherein when the frequency usage detection unit determines that no other user equipment is communicating in the frequency band, the transmission and reception unit performs uplink transmission to the base station.

Another aspect of the present invention relates to a communication control method by user equipment, comprising: receiving an uplink scheduling grant indicative of a radio resource scheduled for uplink transmission to a base station via a cell; performing Listen Before Talk (LBT) on a frequency band in the cell at an LBT timing independent of a scheduled uplink transmission timing; and upon determining that no other user equipment is communicating in the frequency band, performing uplink transmission to the base station.

### [ADVANTAGE OF THE INVENTION]

According to the present invention, the LBT can be implemented in consideration of propagation delay differences in a cell.

### BRIEF DESCRIPTION OF DRAWINGS

FIG. 1 is a schematic diagram for illustrating exemplary disabled transmission due to an uplink transmission timing difference;
FIG. 2A is a schematic diagram for illustrating a radio communication system according to one embodiment of the present invention;
FIG. 2B is a block diagram for illustrating a hardware arrangement of user equipment according to one embodiment of the present invention;
FIG. 2C is a block diagram for illustrating a hardware arrangement of a base station according to one embodiment of the present invention;
FIG. 3 is a block diagram for illustrating a functional arrangement of user equipment according to one embodiment of the present invention;
FIG. 4 is a schematic diagram for illustrating LBT timings according to one embodiment of the present invention; and
FIG. 5 is a flowchart for illustrating a communication control operation by user equipment according to one embodiment of the present invention.

### EMBODIMENTS OF THE INVENTION

Embodiments of the present invention are described below with reference to the drawings.

In embodiments as stated below, user equipment for performing Listen Before Talk (LBT) before uplink transmission is disclosed. Summarizing the present invention, the user equipment performs the LBT at an LBT timing independent of an uplink transmission timing to determine whether another user equipment is using a frequency band in a cell before the uplink transmission. The LBT timing is determined adaptively to avoid erroneous determination of the LBT that may be caused by transmission timing differences introduced to compensate for propagation delay differences among scheduled user equipments. As a result, the LBT can be achieved in consideration of the propagation delay differences among the user equipments in the cell.

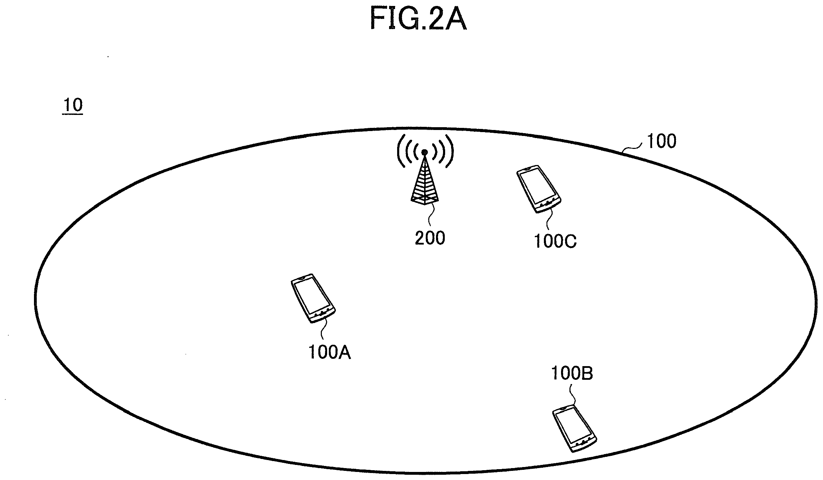

A radio communication system according to one embodiment of the present invention is described with reference to FIG. 2A. FIG. 2A is a schematic diagram for illustrating a radio communication system according to one embodiment of the present invention.

As illustrated in FIG. 2A, a radio communication system 10 has user equipments 100A, 100B and 100C (which may be collectively referred to as user equipment 100 hereinafter) and a base station 200. Typically, the radio communication system 10 may be an LTE system or an LTE-Advanced system. In the illustrated embodiment, only the single base station 200 is illustrated, but a large number of base stations 200 are disposed to cover a service area of the radio communication system 10.

The user equipment 100 uses a scheduled radio resource to wirelessly communicate with the base station 200 via a cell served by the base station 200. Since the user equipments 100A, 100B and 100C are generally located at different distances from the base station 200 and use the scheduled radio resources at appropriate timings, the user equipments perform uplink transmission at transmission timings corresponding to Timing Advance (TA) values specified from the base station 200.

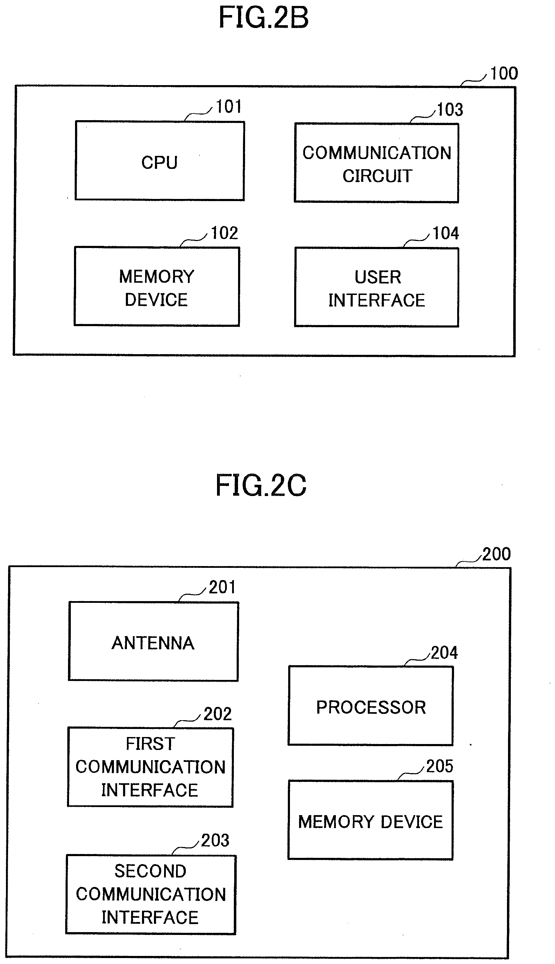

Typically, as illustrated, the user equipment 100 may be any appropriate information processing device with a radio communication function such as a smartphone, a mobile phone, a tablet, a mobile router and a wearable terminal. As illustrated in FIG. 2B, the user equipment 100 is arranged with a CPU (Central Processing Unit) 101 such as a processor, a memory device 102 such as a RAM (Random Access Memory) and a flash memory, a radio communication circuit 103 for transmitting and receiving radio signals to/from the base station 200, a user interface 104 such as an input/output device and a peripheral device and so on. For example, functions and operations of the user equipment 100 as stated below may be implemented by the CPU 101 processing and running data and programs stored in the memory device 102. However, the user equipment 100 is not limited to the above-stated hardware configuration and may be arranged with circuits for implementing one or more of operations as stated below.

The base station 200 establishes a radio connection to the user equipment 100 to transmit downlink (DL) packets received from an upper station communicatively connected on a core network (not shown) to the user equipment 100 as well as transmit uplink (UL) packets received from the user equipment 100 to the upper station. In illustrated in FIG. 2C, the base station 200 is typically arranged with hardware resources such as an antenna 201 for transmitting and receiving radio signals to/from the user equipment 100, a first communication interface 202 (for example, an X2 interface) for communicating with an adjacent base station 200, a second communication interface 203 (for example, an S1 interface) for communicating with the core network, a processor 204 and a circuit for processing signals transmitted and received to/from the user equipment 100 and a memory device 205. Functions and operations of the base station 200 as stated below may be implemented by the processor 204 processing and running data and programs stored in the memory device 205. However, the base station 200 is not limited to the above-stated hardware configuration and may have any other appropriate hardware configuration.

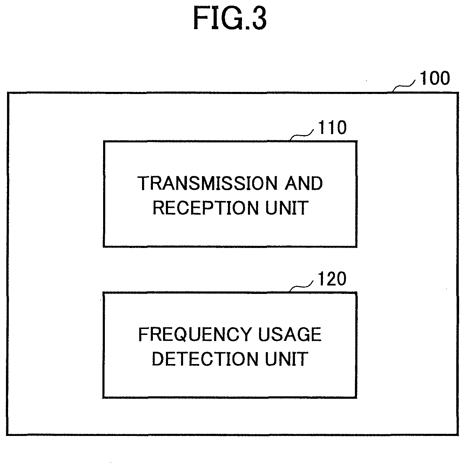

Next, the user equipment according to one embodiment of the present invention is described with reference to FIGS. 3-5. FIG. 3 is a block diagram for illustrating a functional arrangement of the user equipment according to one embodiment of the present invention.

As illustrated in FIG. 3, the user equipment 100 has a transmission and reception unit 110 and a frequency usage detection unit 120.

The transmission and reception unit 110 uses a scheduled radio resource to perform transmission and reception to/from the base station 200 via a cell, and when the frequency usage detection unit 120 determines that no other user equipment 100 is communicating in the frequency band in the cell, the transmission and reception unit 110 performs uplink transmission to the base station 200.

Specifically, the transmission and reception unit 110 uses scheduled radio resources to transmit and receive various radio channels such as uplink/downlink control channels and uplink/downlink data channels to/from the base station 200. The base station 200 indicates Timing Advance (TA) values for adjusting uplink transmission timings to the respective user equipments 100 so as to compensate for propagation delay differences corresponding to distances of the user equipments 100 from the base station 200 in the cell and so on. For example, if the user equipment 100 is located near the base station 200, the base station 200 indicates a relatively small TA value, and otherwise if the user equipment 100 is located in a cell edge, the base station 200 indicates a relatively large TA value. The transmission and reception unit 110 performs uplink transmission at a transmission timing based on the indicated TA value.

The frequency usage detection unit 120 performs the LBT on a frequency band in the cell at an LBT timing independent of a scheduled uplink transmission timing. As stated above, in the conventional LBT, the user equipment 100 performs the LBT at a timing corresponding to a predetermined period before an uplink transmission timing indicated from the base station 200, and the predetermined period is typically a common period statically specified over the respective user equipments. In this embodiment, on the other hand, the frequency usage detection unit 120 performs Listen Before Talk (LBT) on a frequency band in the cell at an LBT timing or an LBT timing based on a period that may be configured for the respective user equipments 100 independent of uplink transmission timings indicated from the base station 200 to determine whether other user equipments 100 are communicating in the frequency band. When it is determined that no other user equipment 100 is communicating in the frequency band, the transmission and reception unit 110 communicates with the base station 200 by using a scheduled radio resource in the cell. Here, the independent LBT timing is set as a timing to avoid erroneous LBT determination that may be caused by transmission timing differences among the user equipments 100 scheduled by the base station 200. For example, the independent LBT timing may be the LBT timing based on a period configured for the respective user equipments 100 independently, and the frequency usage detection unit 120 may perform the LBT at an LBT timing earlier than the period configured for the user equipment 100 independently. In other words, the independent LBT timing according to this embodiment is not the timing based on a certain period statically specified for the user equipments 100 in accordance with the conventional LBT but is the timing based on a specific period configured for each user equipment 100. The term "scheduling" used herein is not limited to dynamic resource assignment by the base station 200 and may be that the base station 200 assigns radio resources to the user equipment 100 in advance. In this case, the user equipment 100 may receive resource configuration information indicative of the assignment from the base station 200 and determine a transmission timing in accordance with the resource configuration information as well as determine the LBT timing independent of the determined transmission timing. For example, the resource configuration information may indicate periodic assignment of radio resources.

Specifically, in the LBT, the frequency usage detection unit 120 searches the whole frequency band in the cell at an independent LBT timing and upon detecting that reception power exceeds a predetermined threshold in at least a portion of the frequency band, determines that the frequency band is used by another user equipment 100 (LBT: NG), and the transmission and reception unit 110 stops uplink transmission to the base station 200. On the other hand, if the reception power is lower than or equal to the predetermined threshold over the whole frequency band, the frequency usage detection unit 120 determines that the frequency band is not being used by any other user equipments 100 (LBT: OK), and the transmission and reception unit 110 performs uplink transmission to the base station 200.

In one embodiment, the frequency usage detection unit 120 may perform the LBT at an LBT timing indicated from the base station 200. Specifically, the base station 200 determines the LBT timings for the respective user equipments 100 such that transmission timing differences introduced based on propagation delay differences in a cell among the user equipments 100 multiplexed into an identical subframe cannot cause erroneous LBT determination and indicates the determined LBT timings to the respective user equipments 100. Upon receiving the LBT timing, the frequency usage detection unit 120 performs the LBT on the frequency band in the cell at the indicated LBT timing.

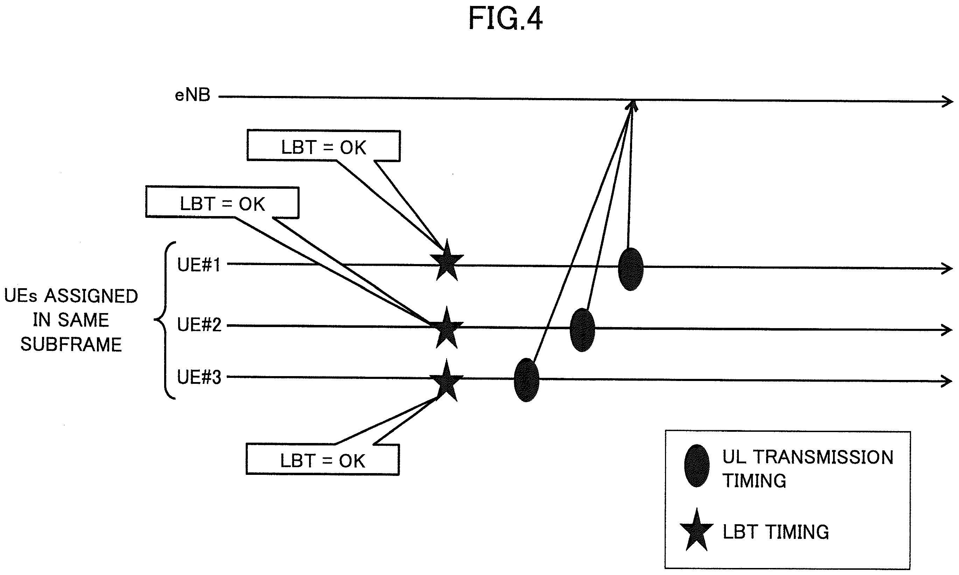

For example, the frequency usage detection unit 120 may perform the LBT at an LBT timing for causing differences of LBT timings indicated to all user equipments 100 multiplexed by the base station 200 into an identical subframe to be accommodated within a predetermined range. Specifically, as illustrated in FIG. 4, the base station 200 calculates independent periods for the LBT timings for all the user equipments 100 multiplexed in the identical subframe such that the LBT timing differences among the user equipments 100 can be accommodated within the predetermined range and indicates the LBT timings or the calculated independent periods to the respective user equipments 100. Upon receiving the LBT timing, the frequency usage detection unit 120 in the respective user equipment 100 would perform the LBT at the common LBT timing. Accordingly, the respective user equipment 100 would perform the LBT at the LBT timing such that the LBT timing differences among the user equipments 100 can be accommodated within the predetermined range, which can avoid erroneous LBT determination that may be caused by transmission timing differences among the scheduled user equipments 100.

In one embodiment, the indicated LBT timing may be an LBT timing for a certain one of the user equipments 100 multiplexed into the identical subframe. For example, the certain user equipment 100 may be the user equipment 100 having the earliest transmission timing in the user equipments 100 multiplexed into the identical subframe (in the illustrated example, UE#3). In other words, the base station 200 may indicate the LBT timing for the user equipment 100 having the largest TA value to all the user equipments 100 based on TA values in a cell or a component carrier (CC) in a licensed band or an unlicensed band. Upon receiving the LBT timing, the frequency usage detection unit 120 in the respective user equipment 100 would perform the LBT at the LBT timing. As a result, the respective user equipments 100 would perform the LBT at the LBT timing for the user equipment 100 having the earliest transmission timing, which may be enabled to easily derive the LBT timing that can avoid the erroneous LBT determination.

In this case, the frequency usage detection unit 120 may adjust the LBT timing in accordance with a change amount indicated from the base station 200 in response to a Timing Advance value for the certain user equipment 100 being changed. For example, if the certain user equipment 100 moves in the cell and the TA value for the certain user equipment 100 is changed, the base station 200 may indicate the change amount to the respective user equipments 100 in a MAC (Medium Access Control) CE (Control Element). For example, the MAC CE may be the MAC CE for an existing TA command. Upon receiving the change amount, the frequency usage detection unit 120 would adjust the LBT timing corresponding to the change amount. As a result, the respective user equipments 100 would adjust the LBT timings dynamically in accordance with the change amount of the TA value for the certain user equipment 100 and can perform the LBT at the LBT timing in consideration of the movement of the certain user equipment 100.

In another embodiment, the frequency usage detection unit 120 may autonomously determine the independent LBT timing regardless of an indication of the LBT timing from the base station 200. As a result, the LBT timing from the base station 200 does not have to be indicated, which can save radio resources for signaling the LBT timing such as a downlink control channel.

As one example, the frequency usage detection unit 120 may determine the LBT timing based on a maximum Timing Advance value for the cell received from the base station 200. Specifically, upon receiving the maximum TA value, the frequency usage detection unit 120 can know the earliest transmission timing and perform the LBT at an arbitrary LBT timing earlier than the earliest transmission timing. For example, the maximum TA value may be indicated in the MAC CE for the existing TA command. As a result, the respective user equipments 100 can perform the LBT before the earliest transmission timing, which can avoid the erroneous LBT determination that may be caused by transmission timing differences among the scheduled user equipments 100.

In another example, the transmission and reception unit 110 may determine uplink transmission to the base station 200 regardless of a determination result of the LBT performed in a period between the maximum Timing Advance value for the cell received from the base station 200 and a Timing Advance value for the user equipment 100. In other words, the frequency usage detection unit 120 may perform the LBT at an LBT timing corresponding to the TA value for the user equipment 100, while the transmission and reception unit 110 may determine uplink transmission to the base station 200 with the exception of the LBT determination result in a period corresponding to (the maximum TA value - the TA value for the user equipment 100). For example, in FIG. 1, the frequency usage detection unit 120 in the UE#1 may determine the uplink transmission to the base station 200 with the exception of the LBT determination result for the UE#3.

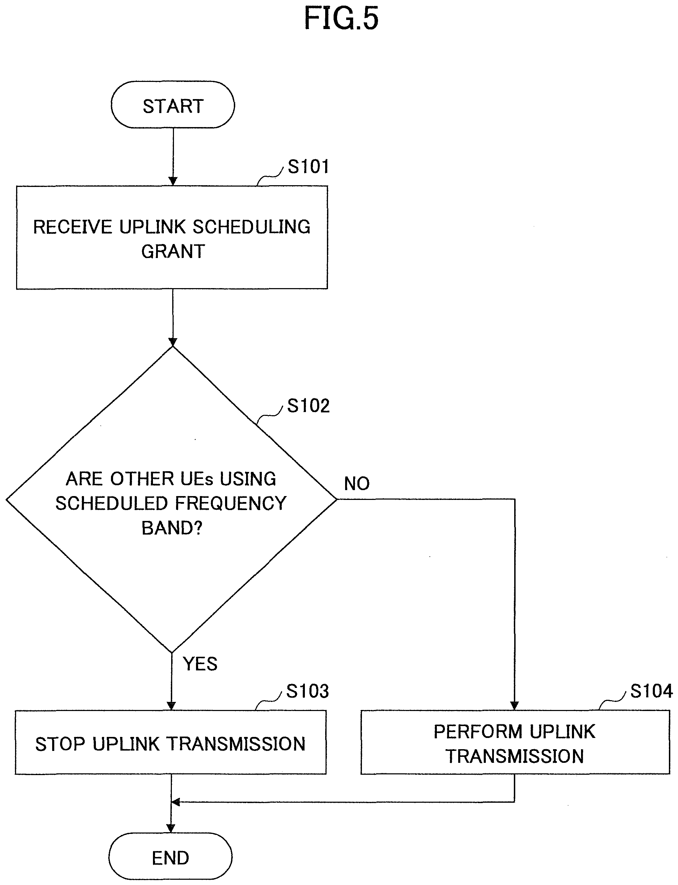

FIG. 5 is a flowchart for illustrating a communication control operation in the user equipment according to one embodiment of the present invention. The communication control operation may start in response to the user equipment 100 requesting uplink transmission after connecting to the base station 200, for example.

At step S101, the user equipment 100 receives an uplink scheduling grant indicative of a radio resource scheduled for uplink transmission to the base station 200 via a cell.

At step S102, the user equipment 100 performs the LBT on a frequency band in the cell at an LBT timing independent of the scheduled uplink transmission timing. In one embodiment, the user equipment 100 may perform the LBT at an LBT timing earlier than an indicated period before the uplink transmission timing based on the period indicated from the base station 200. For example, the base station 200 may indicate how long the LBT should be performed before uplink transmission timings for the user equipments 100 such that the LBT timing can cause LBT timing differences among the user equipments 100 to be accommodated within a predetermined range, and the user equipments 100 may perform the LBT at the indicated LBT timing. In another embodiment, the user equipment 100 may autonomously determine the independent LBT timing regardless of an indication of the LBT timing from the base station 200. For example, the user equipment 100 may determine the LBT timing based on the maximum Timing Advance value for the cell received from the base station 200.

At step S103, upon determining that no other user equipment is communicating in the frequency band, the user equipment 100 performs the uplink transmission to the base station 200.

Although the embodiments of the present invention have been described in detail, the present invention is not limited to the above-stated specific embodiments, and various modifications and variations can be made within the spirit of the present invention as recited in claims.

This international patent application claims the benefit of priority based on Japanese Priority Application No. 2015-016401 filed on January 30, 2015, the entire contents of which are hereby incorporated by reference.

### LIST OF REFERENCE SYMBOLS

- 10:: radio communication system
- 100:: user equipment
- 110:: transmission and reception unit
- 120:: frequency usage detection unit
- 200:: base station

## Claims

1. User equipment, comprising:
a transmission and reception unit configured to use a scheduled radio resource to perform transmission and reception to/from a base station via a cell; and
a frequency usage detection unit configured to perform Listen Before Talk (LBT) on a frequency band in the cell at an LBT timing independent of a scheduled uplink transmission timing,
wherein when the frequency usage detection unit determines that no other user equipment is communicating in the frequency band, the transmission and reception unit performs uplink transmission to the base station.

2. The user equipment as claimed in claim 1, wherein the frequency usage detection unit performs the LBT at an LBT timing indicated from the base station.

3. The user equipment as claimed in claim 2, wherein the frequency usage detection unit performs the LBT at an LBT timing for causing differences of LBT timings indicated to all user equipments multiplexed by the base station into an identical subframe to be accommodated within a predetermined range.

4. The user equipment as claimed in claim 3, wherein the indicated LBT timing is an LBT timing for a certain one of the user equipments multiplexed into the identical subframe.

5. The user equipment as claimed in claim 4, wherein the frequency usage detection unit adjusts the LBT timing in accordance with a change amount indicated from the base station in response to a Timing Advance value for the certain user equipment being changed.

6. The user equipment as claimed in claim 1, wherein the frequency usage detection unit autonomously determines the independent LBT timing regardless of an indication of the LBT timing from the base station.

7. The user equipment as claimed in claim 6, wherein the frequency usage detection unit determines the LBT timing based on a maximum Timing Advance value for the cell received from the base station.

8. The user equipment as claimed in claim 6, wherein the transmission and reception unit determines the uplink transmission to the base station regardless of a determination result of the LBT performed in a period between the maximum Timing Advance value for the cell received from the base station and a Timing Advance value for the user equipment.

9. A communication control method by user equipment, comprising:
receiving an uplink scheduling grant indicative of a radio resource scheduled for uplink transmission to a base station via a cell;
performing Listen Before Talk (LBT) on a frequency band in the cell at an LBT timing independent of a scheduled uplink transmission timing; and
upon determining that no other user equipment is communicating in the frequency band, performing uplink transmission to the base station.
